# EUROPÄISCHE PATENTSCHRIFT

(11) **EP 1 481 852 B1**
(45) Veröffentlichungstag und Bekanntmachung des Hinweises auf die Patenterteilung: **29.11.2006**
(21) Anmeldenummer: 03012024.0
(22) Anmeldetag: 28.05.2003
(51) Int. Cl.: B60R 19/56, B60P 1/44

(54) **Fahrzeuganhänger mit elektrischer Batterie für eine Hubladebühne**
Trailer with electric battery for a loading tailgate
Remorque avec batterie électrique pour un hayon élévateur

(43) Veröffentlichungstag der Anmeldung: 01.12.2004
(73) Patentinhaber: Gerd Bär GmbH, 74078 Heilbronn (DE)
(72) Erfinder: Bär, Gerd, 74078 Heilbronn (DE); Engel, Karlheinz, 74912 Kirchardt (DE)
(74) Vertreter: Dreiss, Fuhlendorf, Steimle & Becker

(56) Entgegenhaltungen:
- EP-A- 0 591 726
- EP-A- 0 857 620
- EP-A- 0 960 771
- DE-U- 8 700 202

## Beschreibung

Die vorliegende Erfindung betrifft einen Fahrzeuganhänger mit einer unterfahrbaren Hubladebühne, einer aus mindestens zwei elektrischen Batterien aufgebauten Zusatzbatterieanlage zum Betrieb der Hubladebühne und einem seitlichen Unterfahrschutz. Ein solcher gattungsgemäßer Fahrzeuganhänger wird im Stand der Technik als bekannt angesehen.

Zusatzbatterieanlagen in Fahrzeuganhängern zum Betrieb von Hubladebühnen sind seit langem bekannt und werden gebraucht, weil die Batteriekapazität des Zugfahrzeugs bei einem Glieder- oder Sattelzug bei intensiver Nutzung nicht ausreichend ist. Außerdem ist die direkte Versorgung eines Hubladebühnenmotors aus der Lkw-Batterie durch eine Leitungslänge von mehr als 15 m und bei der niedrigen Spannung von 12 Volt durch hohe Leitungsverluste sehr problematisch.

Die bekannten Zusatzbatterieanlagen verwenden zwei fahrzeugübliche Batterien, die in Längsrichtung des Anhängers parallel nebeneinander angeordnet sind. Die beiden Batterien können zumindest bei unterfahrbaren Hubladebühnen nur vor der hinteren Achse bzw. Achsen des Anhängers eingebaut werden, da dahinter kein Platz ist. Allerdings ist bei den heute üblichen Sattel- und Zentralachsanhängern vor der bzw. den Achsen kein Platz für zwei parallel nebeneinander angeordnete Batterien vorhanden. Denn der vor der Achse oder den Achsen an sich vorhandene Raum kann aus folgenden Gründen nicht genutzt werden:
- Heute wird der bei Anhängern vor den Achsen vorhandene Platz häufig für einen sogenannten Palettenkasten gebraucht. Hat der Anhänger einen solchen Palettenkasten, bleibt nur übrig, die Batterien parallel nebeneinander in den Palettenkasten zu montieren. Dadurch ist der Palettenkasten für Paletten nicht mehr nutzbar, was von vielen Kunden nicht akzeptiert wird.
- Durch intensivere Nutzung der Hubladebühnen werden bei Anhängern größere Batterien notwendig.
- Heute sind seitliche Unterfahrschutze vorgeschrieben, welche die Unterbringung von parallel nebeneinander angeordneten Batterien unter einem der Längsträger des Anhängerfahrgestells notwendig machen und die Zugänglichkeit zu den Batterien erschweren. Allerdings wird der Ladeboden der Anhänger zur Gewinnung von mehr Ladevolumen durch Verwendung kleinerer Reifen abgesenkt. Dadurch kommt die Unterkante der Längsträger immer näher zum Boden, so dass infolge der unter den Längsträgern angeordneten Batterien die verbleibende Bodenfreiheit kritisch wird.

Der Erfindung liegt daher die Aufgabe zugrunde, bei einem Fahrzeuganhänger der eingangs genannten Art die Batterien trotz des seitlichen Unterfahrschutzes gut zugänglich und möglichst nahe an der Hubladebühne anzuordnen.

Diese Aufgabe wird erfindungsgemäß dadurch gelöst, dass die beiden Batterien in Längsrichtung des Fahrzeuganhängers hintereinander und hinter der oder den Achsen des Fahrzeuganhängers angeordnet sind und dass der seitliche Unterfahrschutz durch die Außenseite der beiden Batterien oder eines diese aufnehmenden Batteriekastens gebildet ist.

Erfindungsgemäß ist kein zusätzlicher seitlicher Unterfahrschutz erforderlich, da die Batterien bzw. der sie aufnehmende Batteriekasten gleichzeitig diesen Unterfahrschutz bildet. Dadurch ist auch hinter der oder den Achsen des Anhängers der gleiche seitliche Unterfahrschutz für Radfahrer und Fußgänger wie vor den Achsen gegeben. Da kein zusätzlicher seitlicher Unterfahrschutz vorhanden ist, sind die Batterien zur Wartung und zum Austausch stets gut zugänglich. Die Zugänglichkeit der Batterien ist noch weiter verbessert, wenn sie oder ihr Batteriekasten quer zur Fahrtrichtung ausgezogen werden können. Um die beweglichen Teile der Hubladebühne nicht zu stören, sind die Batterien, insbesondere bei niedrig liegenden Anhängern, so nah wie möglich unter dem Ladeboden des Anhängers angeordnet. Durch die Nähe der Zusatzbatterieanlage zum Hubladebühnenmotor entstehen sehr kurze Leitungen, die eine sehr verlustarme Versorgung des Motors sicherstellen. Die Leitungsquerschnitte können deshalb gering gehalten werden. Ein vor der bzw. den Achsen vorhandener Palettenkasten kann in seinem maximalen Volumen verwendet werden.

Weitere vorteilhafte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: das Heck eines Fahrzeuganhängers mit einer unterfahrbaren Hubladebühne und einer Zusatzbatterieanlage für die Hubladebühne in einer Seitenansicht;
- Fig. 2: eine perspektivische Ansicht der Zusatzbatterieanlage der Fig. 1;
- Fig. 3: die am Anhängerfahrgestell befestigte Zusatzbatterieanlage mit einem nach innen zurückgeschobenen Batteriekasten; und
- Fig. 4: die in Fig. 3 gezeigte Zusatzbatterieanlage mit ausgezogenem Batteriekasten.

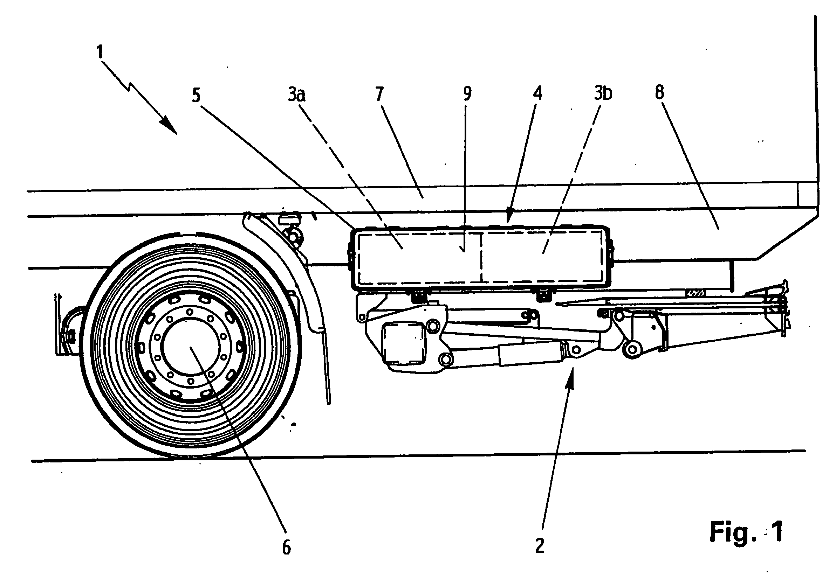

Der in **Fig. 1** gezeigte Fahrzeuganhänger **1** weist eine am Fahrzeugheck vorgesehene unterfahrbare Hubladebühne **2** und eine aus mindestens zwei elektrischen Batterien **3a, 3b** aufgebaute Zusatzbatterieanlage **4** zum Betrieb der Hubladebühne 2 auf. Die beiden Batterien 3a, 3b sind hintereinander in einem Batteriekasten **5** untergebracht, der hinter der Anhängerachse **6** des Fahrzeuganhängers 1 und vertikal zwischen Hubladebühne 2 und Ladeboden **7** des Fahrzeuganhängers 1 angeordnet ist. Der Batteriekasten 5 ist an einem Längsträger **8** des Anhängerfahrgestells befestigt, wobei die Oberkante der beiden Batterien 3a, 3b bzw. des Batteriekastens 5 sich auf gleicher Höhe wie der Längsträger 8 befindet. Durch die Außenseite **9** des Batteriekastens 5 ist ein seitlicher Unterfahrschutz gebildet.

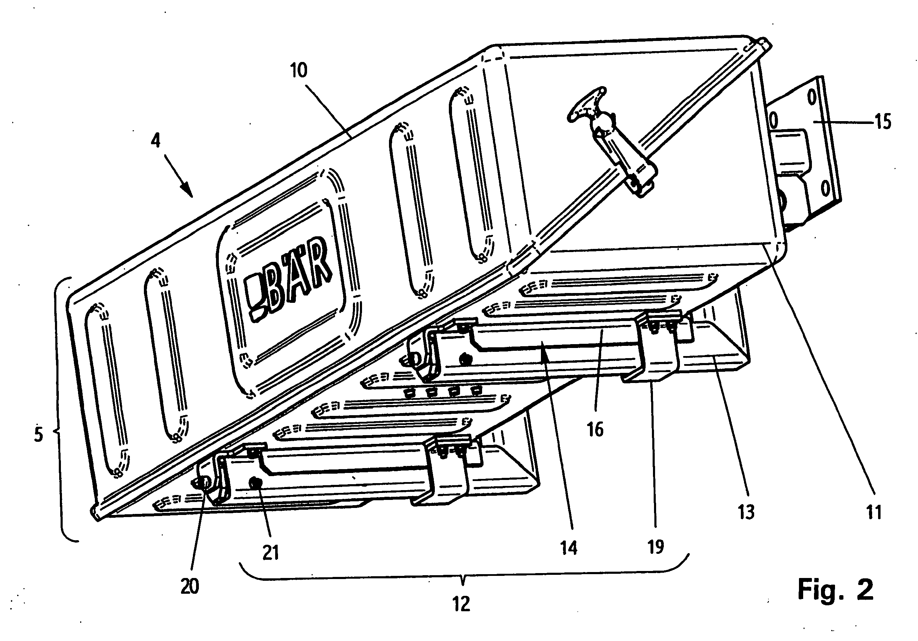

Wie in **Fig. 2** gezeigt, ist der Batteriekasten **5** durch ein abnehmbares Oberteil **10** und ein Unterteil **11** gebildet, welches über einen Querauszug **12** am Längsträgers 8 des Anhängerfahrgestells befestigt ist. Der Querauszug 12 hat zwei feststehende Grundträger **13,** an denen jeweils ein Teleskopträger **14** ausziehbar geführt ist. Die beiden Grundträger 13 haben jeweils an ihrem nach oben abgewinkelten Ende einen Flansch **15**, mit dem sie am Vertikalsteg des Längsträgers 8 angeschraubt werden.

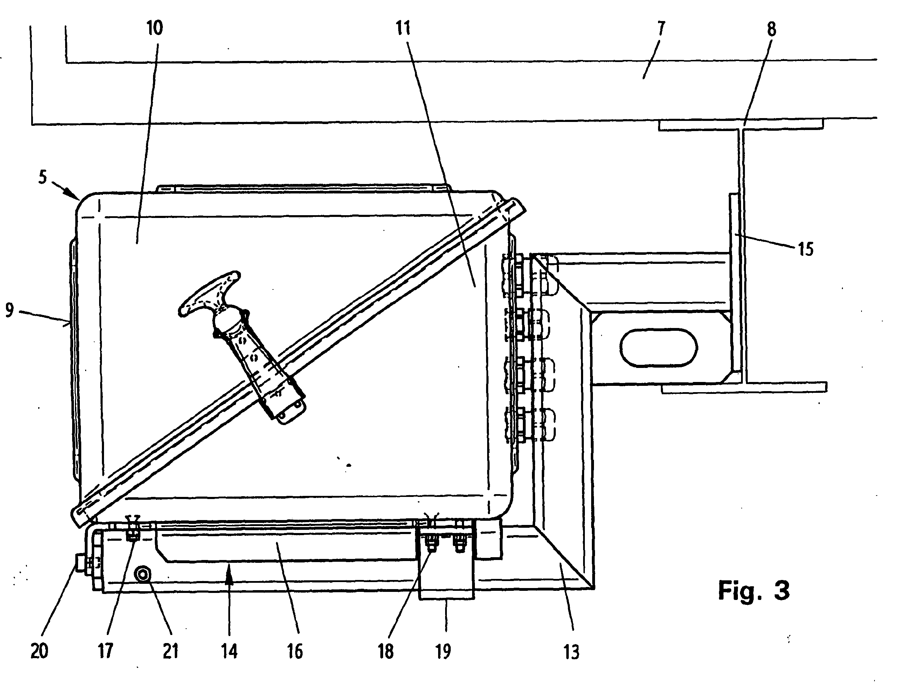

Das Unterteil 11 liegt auf den beiden Grundträgern 13 verschiebbar auf, wobei jeweils zwei am Teleskopträger 14 unten vorgesehene Führungsschienen **16** das Unterteil 11 seitlich an den Grundträgern 13 führen. Die Teleskopträger 14 sind am Unterteil 11 jeweils mittels Schrauben **17, 18** (Fig. 3) befestigt. Durch die weiter innen liegenden Schrauben 18 ist am Unterteil 11 jeweils ein Haltebügel **19** befestigt, der den Grundträger 13 unten umgreift und so das Unterteil 11 auf dem Grundträger 13 sichert.

In **Fig. 3** ist die Zusatzbatterieanlage **4** in ihrer Fahrstellung gezeigt, in welcher der Batteriekasten 5 nach innen zurückgeschoben ist und den seitlichen Unterfahrschutz bildet. In der Fahrstellung ist der Batteriekasten 5 jeweils mittels zweier Sicherungsschrauben **20** gesichert, welche die Teleskopträger 14 jeweils mit den Grundträgern 13 fest verbinden.

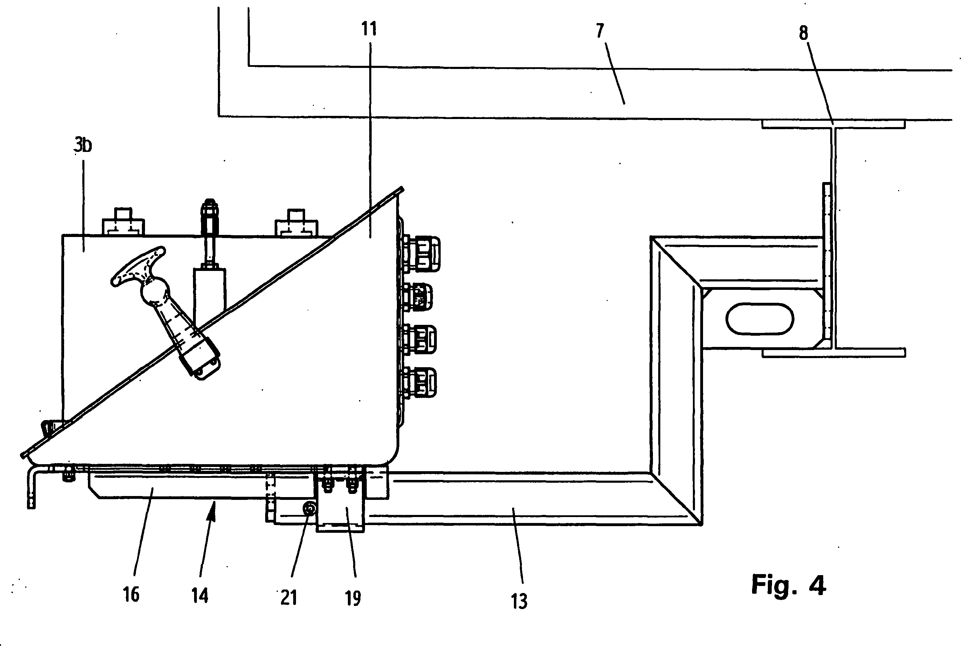

Müssen jetzt die Batterien 3a, 3b gewartet oder getauscht werden, kann nach Entfernen der Sicherungsschrauben 20 der Batteriekasten 5 quer zur Fahrtrichtung herausgezogen werden, bis der Haltebügel 19 an einem Anschlag **21** des Grundträgers 13 anliegt. In dieser in **Fig. 4** gezeigten ausgezogenen Stellung sind die Batterien 3a, 3b gut zugänglich. Die zu- und abführenden Batteriekabel müssen selbstverständlich die zum Ausziehen des Batteriekastens 5 erforderliche Schlaufenlänge haben.

## Patentansprüche

1. Fahrzeuganhänger (1) mit einer unterfahrbaren Hubladebühne (2), einer aus mindestens zwei elektrischen Batterien (3a, 3b) aufgebauten Zusatzbatterieanlage (4) zum Betrieb der unterfahrbaren Hubladebühne (2) und einem seitlichen Unterfahrschutz,
**dadurch gekennzeichnet,**
**dass** die beiden Batterien (3a, 3b) in Längsrichtung des Fahrzeuganhängers (1) hintereinander und hinter der hinteren Achse (6) des Fahrzeuganhängers (1) angeordnet sind und dass der seitliche Unterfahrschutz durch die Außenseite (9) der beiden Batterien (3a, 3b) oder eines diese aufnehmenden Batteriekastens (5) gebildet ist.

2. Fahrzeuganhänger nach Anspruch 1, **dadurch gekennzeichnet, dass** die beiden Batterien (3a, 3b) oder der diese aufnehmende Batteriekasten (5) an einem Längsträger (8) des Anhängerfahrgestells befestigt sind.

3. Fahrzeuganhänger nach Anspruch 1 oder 2, **dadurch gekennzeichnet, dass** die beiden Batterien (3a, 3b) oder der diese aufnehmende Batteriekasten (5) in Querrichtung des Fahrzeuganhängers (1) nach außen bewegbar, insbesondere ausziehbar, gelagert sind.

4. Fahrzeuganhänger nach Anspruch 3, **dadurch gekennzeichnet, dass** die beiden Batterien (3a, 3b) oder der diese aufnehmende Batteriekasten (5) an einem Teleskopträger (14) befestigt sind.

5. Fahrzeuganhänger nach einem der vorhergehenden Ansprüche, **dadurch gekennzeichnet, dass** die beiden Batterien (3a, 3b) oder der diese aufnehmende Batteriekasten (5) an mindestens einem, vorzugsweise an zwei Grundträgem (13) befestigt ist, die mit einem nach oben abgewinkelten Ende am Längsträger (8) des Anhängerfahrgestells befestigt sind.

6. Fahrzeuganhänger nach einem der vorhergehenden Ansprüche, **dadurch gekennzeichnet, dass** die beiden Batterien (3a, 3b) oder der diese aufnehmende Batteriekasten (5) an der Unterseite des Ladebodens (7) des Fahrzeuganhängers (1) anliegen.

7. Fahrzeuganhänger nach einem der vorhergehenden Ansprüche, **dadurch gekennzeichnet, dass** die beiden Batterien (3a, 3b) oder der diese aufnehmende Batteriekasten (5) vertikal zwischen unterfahrbarer Hubladebühne (2) und Ladeboden (7) des Fahrzeuganhängers (1) angeordnet sind.

## Claims

1. Vehicle trailer (1) with a retractable loading platform (2), an additional battery system (4) constructed from at least two electric batteries (3a, 3b) for operating the retractable loading platform (2), and a lateral underride safeguard,
**characterized in that** the two batteries (3a, 3b) are arranged one after the other in the longitudinal direction of the vehicle trailer (1) and behind the rear axle (6) of the vehicle trailer (1), and **in that** the lateral underride safeguard is formed by the outside (9) of the two batteries (3a, 3b) or of a battery box (5) accommodating the latter.

2. Vehicle trailer according to Claim 1, **characterized in that** the two batteries (3a, 3b) or the battery box (5) accommodating the latter are fixed to a longitudinal member (8) of the trailer chassis.

3. Vehicle trailer according to Claim 1 or 2, **characterized in that** the two batteries (3a, 3b) or the battery box (5) accommodating the latter are mounted such that they can be moved outwards, in particular pulled out, in the transverse direction of the vehicle trailer (1).

4. Vehicle trailer according to Claim 3, **characterized in that** the two batteries (3a, 3b) or the battery box (5) accommodating the latter are fixed to a telescopic support (14).

5. Vehicle trailer according to one of the preceding claims, **characterized in that** the two batteries (3a, 3b) or the battery box (5) accommodating the latter are fixed to at least one, preferably two, base supports (13), which are fixed to the longitudinal member (8) of the trailer chassis by an end angled over upwards.

6. Vehicle trailer according to one of the preceding claims, **characterized in that** the two batteries (3a, 3b) or the battery box (5) accommodating the latter rest against the underside of the loading floor (7) of the vehicle trailer (1).

7. Vehicle trailer according to one of the preceding claims, **characterized in that** the two batteries (3a, 3b) or the battery box (5) accommodating the latter are arranged vertically between retractable loading platform (2) and loading floor (7) of the vehicle trailer (1).

## Revendications

1. Remorque (1) avec un hayon élévateur rétractable (2), un système de batterie supplémentaire (4) constituée d'au moins deux batteries électriques (3a, 3b) pour le fonctionnement du hayon élévateur rétractable (2) et un dispositif anti-encastrement latéral,
**caractérisée en ce que**
les deux batteries (3a, 3b) sont disposées dans le sens longitudinal de la remorque (1) l'une derrière l'autre et derrière l'essieu arrière (6) de la remorque (1) et **en ce que** le dispositif anti-encastrement latéral est formé par le côté extérieur (9) des deux batteries (3a, 3b) ou d'un boîtier de batterie (5) contenant celles-ci.

2. Remorque selon la revendication 1, **caractérisée en ce que** les deux batteries (3a, 3b) ou le boîtier de batterie (5) contenant celles-ci sont fixés à un longeron (8) du châssis de la remorque.

3. Remorque selon la revendication 1 ou 2, **caractérisée en ce que** les deux batteries (3a, 3b) ou le boîtier de batterie (5) contenant celles-ci sont disposés dans le sens transversal de la remorque (1) déplaçables vers l'extérieur, en particulier coulissantes.

4. Remorque selon la revendication 3, **caractérisée en ce que** les deux batteries (3a, 3b) ou le boîtier de batterie (5) contenant celles-ci sont fixés à un support télescopique (14).

5. Remorque selon l'une des revendications précédentes, **caractérisée en ce que** les deux batteries (3a, 3b) ou le boîtier de batterie (5) contenant celles-ci sont fixés à au moins un, de préférence deux barres porte-charge (13), qui sont fixées au longeron (8) du châssis de la remorque par une extrémité coudée vers le haut.

6. Remorque selon l'une des revendications précédentes, **caractérisée en ce que** les deux batteries (3a, 3b) ou le boîtier de batterie (5) contenant celles-ci se trouvent sur le côté inférieur du plateau de chargement (7) de la remorque (1).

7. Remorque selon l'une des revendications précédentes, **caractérisée en ce que** les deux batteries (3a, 3b) ou le boîtier de batterie (5) contenant celles-ci sont disposés verticalement entre le hayon élévateur rétractable (2) et le plateau de chargement(7) de la remorque (1).
